(19)

Europäisches Patentamt
European Patent Office
Office européen des brevets

(11)  **EP 4 727 063 A1**

(12) **EUROPEAN PATENT APPLICATION**

(43) Date of publication:
   **15.04.2026   Bulletin 2026/16**

(21) Application number: **25203017.6**

(22) Date of filing: **18.09.2025**

(51) International Patent Classification (IPC):
   *H04L 9/40* (2022.01)      *H04L 67/10* (2022.01)
   *G06F 9/50* (2006.01)      *G06Q 20/14* (2012.01)
   *G06Q 30/04* (2012.01)     *G06Q 30/06* (2023.01)
   *G06Q 50/10* (2012.01)     *H04L 12/14* (2024.01)
   *H04M 15/00* (2024.01)

(52) Cooperative Patent Classification (CPC):
   **H04L 63/10; G06F 9/5072; G06Q 20/145;
   G06Q 30/04; G06Q 30/06; G06Q 50/10;
   H04L 12/14; H04L 63/08; H04L 63/105;
   H04L 67/10; H04M 15/00;** G06F 2209/5022;
   G06F 2209/504; H04L 63/083

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **GE KH LA MA MD TN**

(30) Priority: **08.10.2024   US 202418909853**

(71) Applicant: **Microsoft Technology Licensing, LLC
   Redmond, WA 98052 (US)**

(72) Inventors:
   • **Sethuraman, Prabhakaran
     Redmond, WA, 98052 (US)**
   • **Saha, Srishty
     Redmond, WA, 98052 (US)**
   • **Gangavarapu, Bharat Kumar
     Redmond, WA, 98052 (US)**

(74) Representative: **Grünecker Patent- und
   Rechtsanwälte
   PartG mbB
   Leopoldstraße 4
   80802 München (DE)**

(54) **DYNAMIC REAUTHORIZATION THRESHOLDS FOR CLOUD RESOURCE ALLOCATION**

(57)    A dynamic reauthorization threshold is disclosed. A cloud customer is assigned a first reauthorization threshold associated with a first resource usage quota. When a current usage of the customer exceeds the first reauthorization threshold, a customer reauthorization process is performed. If the customer fails the reauthorization process, resources allocated to the customer are deallocated. If the customer passes the reauthorization process, the customer is assigned a next reauthorization threshold associated with a second resource usage quota. The next reauthorization threshold is determined based on at least one of: a second reauthorization threshold determined based at least on a variance of the current resource usage from the first resource usage quota, a base scaling factor, and a randomization factor, or a third reauthorization threshold determined by a machine learning model based at least on the first reauthorization threshold, the current resource usage, and the second reauthorization threshold.

100

FIG. 1

EP 4 727 063 A1

EP 4 727 063 A1

**Description**

BACKGROUND

"Cloud computing" refers to the on-demand availability of computer system resources (e.g., applications, services, processors, storage devices, file systems, and databases) over the Internet and data stored in cloud storage. Servers hosting cloud-based resources may be referred to as "cloud-based servers" (or "cloud servers"). A "cloud computing service" refers to an administrative service (implemented in hardware that executes in software and/or firmware) that manages a set of cloud computing computer system resources.

Cloud computing platforms include quantities of cloud servers, cloud storage, and further cloud computing resources that are managed by a cloud computing service. Cloud computing platforms offer higher efficiency, greater flexibility, lower costs, and better performance for applications and services relative to "on-premises" servers and storage. Accordingly, users are shifting away from locally maintaining applications, services, and data and migrating to cloud computing platforms. One of the pillars of cloud services are compute resources, which are used to execute code, run applications, and/or run workloads in a cloud computing platform. Such compute resources may be made available to users in sets, also referred to as "clusters."

Thresholding enables cloud customers to pay for their cloud services after their resource usage exceeds a threshold resource usage quota or at the end of the charging cycle, whichever occurs first. When the customer exceeds their currently assigned threshold, the customer is assigned the next higher threshold for the remainder of the charging cycle. This enables the customer to consume an increased number of additional resource units before exceeding the next higher threshold and needing to pay for the additional cloud resources they consume.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A dynamic reauthorization threshold is disclosed. A cloud customer is assigned a first reauthorization threshold associated with a resource usage quota that authorizes a first number of authorized resource units. When a current usage of the customer exceeds the first reauthorization threshold, a customer reauthorization process is performed. If the customer fails the reauthorization process, resources allocated to the customer are deallocated. If the customer passes the reauthorization process, the customer is assigned a next reauthorization threshold that is associated with a second resource usage quota authorizing a second number of authorized resource units.

Further features and advantages of the embodiments, as well as the structure and operation of various embodiments, are described in detail below with reference to the accompanying drawings. It is noted that the claimed subject matter is not limited to the specific embodiments described herein. Such embodiments are presented herein for illustrative purposes only. Additional embodiments will be apparent to persons skilled in the relevant art(s) based on the teachings contained herein.

BRIEF DESCRIPTION OF THE DRAWINGS/FIGURES

The accompanying drawings, which are incorporated herein and form a part of the specification, illustrate embodiments of the present application and, together with the description, further serve to explain the principles of the embodiments and to enable a person skilled in the pertinent art to make and use the embodiments.

FIG. 1 shows a block diagram of an example system for determining a dynamic reauthorization threshold, in accordance with an embodiment.
FIG. 2 shows a block diagram of an example system for performing reauthorization using a dynamic reauthorization threshold, in accordance with an embodiment.
FIG. 3 shows a flowchart of an example process for performing reauthorization using a dynamic reauthorization threshold, in accordance with an embodiment.
FIG. 4 shows a flowchart of an example process for determining a dynamic reauthorization threshold, in accordance with an embodiment.
FIG. 5 shows a flowchart of an example process for determining a dynamic reauthorization threshold using an adaptive percentage, in accordance with an embodiment.
FIG. 6 depicts a flowchart of an example process for determining a dynamic reauthorization threshold using a machine learning model, in accordance with an embodiment.
FIG. 7 shows a block diagram of an example computer system in which embodiments may be implemented.

The subject matter of the present application will now be described with reference to the accompanying drawings. In the drawings, like reference numbers indicate identical or functionally similar elements. Additionally, the left-most digit(s) of a reference number identifies the drawing in which the reference number first appears.

DETAILED DESCRIPTION

I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

As used herein, the term "authorized resource unit" refers to a unit of resource usage that is below the current reauthorization threshold (i.e., is within the current resource usage quota of the customer).

As used herein, the term "unauthorized resource unit" refers to a unit of resource usage that is above the current reauthorization threshold (i.e., is outside the current resource usage quota of the customer).

II. Example Embodiments

Thresholding enables cloud customers to pay for their cloud services when their resource usage exceeds a threshold resource usage quota or at the end of the charging/payment cycle (e.g., a predetermined timeframe such as monthly, yearly, etc.), whichever occurs first. A new customer is assigned an initial base reauthorization threshold associated with an initial resource usage quota based on a risk score (e.g., credit score, etc.) associated with the customer. In embodiments, the current cumulative resource usage of the customer is periodically (e.g., every 30 minutes, hour, day, etc.) analyzed to determine whether the current cumulative resource usage of the customer exceeds the initial base reauthorization threshold associated with the initial resource usage quota. For example, if the current cumulative resource usage of the customer exceeds their currently assigned reauthorization threshold, a reauthorization process is performed for the customer. In embodiments, the reauthorization process includes at least one of: reauthenticating the customer using, for example, a one-time passcode, and/or charging a charge/payment method of the customer for the current cumulative resource usage. If the customer passes the reauthorization process, the current cumulative resource usage of the customer is reset (e.g., to zero resource units), and the customer is assigned a next higher reauthorization threshold associated with the next higher resource usage quota for the subsequent usage cycle (e.g., remainder of the charging cycle, subsequent charging cycle, etc.). The next higher reauthorization threshold permits the customer to consume an increased number of additional resource units before they exceed the next reauthorization threshold and are charged for the additional cloud resources that they consume. In embodiments, the next higher threshold is associated with higher tier of service and/or a lower rate (e.g., lower cost per resource unit), or may be defined in another manner.

Under thresholding, cloud customers are not charged for the cloud services consumed until the end of the charging cycle (e.g., end of the month) unless their usage exceeds their currently assigned reauthorization threshold resource usage quota before the end of the charging cycle. In some systems, a customer reauthorization process is not instantaneous. For example, a failed attempt to charge a customer charge method (e.g., credit card, bank account) triggers an attempt to contact the customer for a backup charge method. In order to avoid disrupting customer cloud usage, cloud providers permit customer cloud resource usage to exceed the threshold resource usage quota associated with their currently assigned reauthorization threshold. In some situations, the customer is permitted to continue to consume cloud resources until it is determined that the customer reauthorization process has failed. Such a setup encourages cloud customers to consume additional cloud services that results in higher revenue for the cloud services provider. However, such a setup also has the disadvantage of exposing the cloud services provider to the potential risk that the cloud customer will consume cloud services without later paying for the consumed cloud services.

Current thresholding schemes employ predictable reauthorization threshold values that are either fixed or iterative. Such reauthorization threshold values are easy to predict and exploit by customers, who can then rapidly increase their consumption of cloud services and not pay for the consumed cloud services. Embodiments disclosed herein are directed to an adaptive thresholding scheme that dynamically determines a next reauthorization threshold to assign the customer based on various factors, such as, but not limited to, a variance of the current usage of the customer from a currently assigned reauthorization threshold, a rate or frequency of breaching a reauthorization threshold, a randomization factor that provides a pseudorandom value within a predetermined range, a customer usage history (e.g., average usage, peak usage, seasonal usage, usage trends, etc.), and/or a customer reauthorization threshold history.

In embodiments, a next reauthorization threshold is calculated using both an adaptive percentage algorithm and a machine learning model. For instance, a next reauthorization threshold is determined by the adaptive percentage algorithm and provided to a machine learning model to verify the accuracy of the next reauthorization threshold. For instance, a prompt comprising the first reauthorization threshold, the current resource usage of the customer, and the next reauthorization threshold determined by the adaptive percentage algorithm is provided to the machine learning model, and a response comprising an AI-generated next reauthorization threshold is received from the machine learning model. In embodiments, a follow-up prompt comprising the next reauthorization threshold determined by the adaptive percentage algorithm and the AI-generated next reauthorization threshold is provided to the machine learning model, and a response comprising a confidence score for the next reauthorization threshold determined by the adaptive percentage algorithm and a confidence score for the AI-generated next reauthorization threshold is received from the machine learning model. In embodiments, the next reauthorization threshold associated with the higher confidence score is assigned to the customer as the next reauthorization threshold.

In embodiments, a next reauthorization threshold is calculated using an adaptive percentage algorithm based on input parameters provided in an input data structure (e.g., vector, tuple, etc.). In embodiments, a current cumulative resource usage of a customer is periodically (e.g., every 30 minutes, hour, day, etc.) analyzed to determine whether the current cumulative resource usage of the customer exceeds a current reauthorization threshold. In embodiments, when the current cumulative resource usage of the customer exceeds a current reauthorization threshold, the adaptive percentage algorithm is provided with an input data structure comprising input parameters, such as, but not limited to, the current cumulative resource usage of the customer, the current reauthorization threshold of the customer, a duration since a last time the customer breached a reauthorization threshold, and/or the like. In embodiments, the adaptive threshold algorithm determines a variance of the current cumulative resource usage from the current reauthorization threshold, which indicates the degree to which the current cumulative resource usage exceeds the current reauthorization threshold. In an example scenario, a customer with a current cumulative resource usage of 450 resource units and a current reauthorization threshold of 250 resource units will exceed their current reauthorization threshold (e.g., 405 resource units > 250 resource units). In embodiments, the variance is a percentage represented by the following formula:

$$Var = 100 - \left(\frac{Usage_{Current}}{Th_{Current}} \times 100\right) \qquad (Eq.\ 1),$$

where $Usage_{Current}$ represents a number of unauthorized units by which the current resource usage exceeds the current threshold, and $Th_{Current}$ represents the current reauthorization threshold, for example, when the variance is negative. Continuing with the example scenario above, the variance of the customer usage (e.g., -80) can be determined using equation 1 by subtracting from 100 the result obtained by dividing the current cumulative resource usage (e.g., 450 resource units) by the current reauthorization threshold (e.g., 250 resource units) and multiplying by 100.

In embodiments, the adaptive percentage algorithm determines a base incrementation percentage based on the variance. For instance, when the variance is positive (e.g., greater than zero), zero, or within a predetermined negative range (e.g., greater than -100), the adaptive percentage algorithm determines the base incrementation percentage based on a default base incrementation percentage (e.g., 25%, etc.). In embodiments, as the negative magnitude of the variance increases, the adaptive percentage algorithm determines the base incrementation percentage by reducing the default base incrementation percentage as a function of the variance. For instance, when the variance falls within a first variance range (e.g., between -100 and -200), the adaptive percentage algorithm determines the base incrementation percentage as a first reduced incrementation percentage (e.g., 20%, etc.), when the variance falls within a second variance range (e.g., between -200 and -300), the adaptive percentage algorithm determines the base incrementation percentage as a second reduced incrementation percentage (e.g., 18%, etc.), when the variance falls within a third variance range (e.g., between -300 and -400), the adaptive percentage algorithm determines the base incrementation percentage as a third reduced incrementation percentage (e.g., 16%, etc.), and when the variance falls within a fourth variance range (e.g., less than -400), the adaptive percentage algorithm determines the base incrementation percentage as a fourth reduced incrementation percentage (e.g., 14%, etc.). In embodiments, the number of variance ranges and/or the number of reduced incrementation percentage differ from those provided above. Continuing with the example scenario above, the adaptive percentage algorithm determines the base incrementation percentage for the customer as the default base incrementation percentage (e.g., 25%) because the variance of the customer usage (e.g., -80) falls within the predetermined negative range (e.g., greater than -100).

In an embodiment, the adaptive percentage algorithm determines an incrementation percentage based on the base incrementation percentage and a randomization factor. In embodiments, the randomization factor is a pseudorandom value determined based on the last time the customer breached a reauthorization threshold, and a seed value (e.g., 10, etc.). In embodiments, the randomization factor is a pseudorandom value within a predetermined value range that is determined based on the seed value and a duration (e.g., number of days) since the last time the customer breached a reauthorization threshold. For instance, the randomization factor is determined as a value between zero and the seed value (e.g., 10%, etc.), where the duration since the last time the customer breached a reauthorization threshold determines whether the randomization factor is closer to the lower end of the range (e.g., zero, etc.) or the higher end of the range (e.g., seed value, 10%, etc.). In embodiments, the incrementation percentage is a percentage represented by the following formula:

$$Percentage_{Inc} = Percentage_{Base} + Rand \qquad \text{(Eq. 2)},$$

where $Percentage_{Base}$ represents the base incrementation percentage and $Rand$ represents the randomization factor. Continuing with the example scenario above, the adaptive percentage algorithm determines the incrementation percentage (e.g., 35%) as the summation of the base incrementation percentage (e.g., 25%) and the randomization factor (e.g., 10%)

In an embodiment, the adaptive percentage algorithm determines the next reauthorization threshold by summing the initial base reauthorization threshold and a mathematical product of the current cumulative resource usage of the customer and a scaling factor (e.g., 1 + $Percentage_{Base}$). In embodiments, the initial base reauthorization threshold is determined based on a risk score associated with the customer. In embodiments, the risk score is based on, for example, but not limited to, a credit score associated with the customer, a charge history associated with the customer, and/or the like. In an embodiment, the next reauthorization threshold is represented by the following formula:

$$Th_{next} = (Current\ Usage) * (1 + Percentage_{Inc}) + Th_{Base} \qquad \text{(Eq. 3)},$$

(Eq. 3), where $Th_{Base}$ represents the initial base reauthorization threshold associated with the customer. Continuing with the example scenario above, the adaptive percentage algorithm determines the next reauthorization threshold (e.g., 857.5 resource units) by adding the initial base reauthorization threshold (e.g., 250 resource units) to the product of the current cumulative resource usage (e.g., 450 resource units) and a scaling factor (e.g., 1+35%).

In embodiments, the adaptive percentage algorithm calculates a number of resource units to charge a charge method of the customer based on the current cumulative resource usage, the randomization factor, the variance, and a predetermined authorization percentage (e.g., 50%, etc.). In embodiments, when the current cumulative resource usage exceeds the current reauthorization threshold, a charge method associated with the customer is charged for a number of resource units during a reauthorization process. In an embodiment, the charge method is charged for the number of resource units represented by the following formula:

$$Amount_{Auth} = \frac{(Usage_{Current}) \times \left( Rand + Percentage_{Auth} + \frac{|Var|}{100} \right)}{100} \qquad \text{(Eq. 4)},$$

where $Percentage_{Auth}$ represents the predetermined authorization percentage (e.g., 50%). Continuing with the example scenario above, the adaptive percentage algorithm calculates the number of resource units (e.g., 630 resource units) to charge the charge method of the customer by dividing the product of the current cumulative resource usage (e.g., 450 resource units), the randomization factor (e.g., 10%), the predetermined authorization percentage (e.g., 50%), and the absolute value of the variance as a percentage (e.g., 80%) by 100.

In an embodiment, a next reauthorization threshold generated by the adaptive percentage algorithm is verified using a machine learning model, such as, but not limited to, a large language model. For instance, a prompt is generated and provided to a machine learning model to request the machine learning model to provide a next reauthorization threshold based on the current reauthorization threshold, the current cumulative resource usage of the customer, the duration since the last time the customer breached a reauthorization threshold, and the next reauthorization threshold generated by the adaptive percentage algorithm. Continuing with the example scenario above, the machine learning model is provided with the following example prompt:

"A customer having a current resource quota of 250 resource units has consumed 450 resource units two days after exceeding their previous resource quota. Our algorithm recommends a next resource quota of 857.5 resource units. Please recommend a next resource quota for this customer."

In embodiments, the machine learning model responds to the prompt with a recommendation for the next reauthorization threshold (e.g., 835 resource units). In embodiments, the machine learning model includes, for example but not limited to, a commercially available machine learning model, a proprietary machine learning model, a machine learning model fine-tuned to provide a next reauthorization threshold, a machine learning model augmented to provide a next reauthorization threshold, and/or the like. For instance, a commercially available machine learning model is, in embodiments, augmented to provide a next reauthorization threshold by providing the machine learning model with a description (e.g., document, instructions, knowledgebase, etc.) on how to select a next reauthorization threshold.

In embodiments, the next reauthorization threshold for the customer is determined based on a comparison of a confidence score associated with the next reauthorization threshold generated by the adaptive percentage algorithm and a confidence score associated with the next reauthorization threshold recommended by the machine learning model. In embodiments, the confidence scores are determined based on a follow-up prompt is generated and provided to the machine learning model requesting the machine learning model to provide a confidence score for the next reauthorization threshold generated by the adaptive percentage algorithm and a confidence score for the next reauthorization threshold recommended by the machine learning model. Continuing with the example scenario above, the machine learning model is provided with the following example follow-up prompt:

"Please provide a confidence score for the next resource quota recommended by our algorithm and a confidence score for your recommended next resource quota."

In embodiments, the machine learning model responds to the follow-up prompt with a first confidence score (e.g., 0.82) for the next reauthorization threshold generated by the adaptive percentage algorithm and a second confidence score (e.g., 0.93) for the next reauthorization threshold recommended by the machine learning model. Continuing with the example scenario above, the confidence score (e.g., 0.93) associated with the next reauthorization threshold recommended by the machine learning model (e.g., 835 resource units) is greater than the confidence score (0.82) associated with the next reauthorization threshold generated by the adaptive percentage algorithm (e.g., 857.5 resource units), and the reauthorization threshold recommended by the machine learning model (e.g., 835 resource units) replaces the current reauthorization threshold (e.g., 250 resource units) as a new current reauthorization threshold. In embodiments, the current cumulative resource usage of the customer is reset (e.g., to zero) and the current cumulative resource usage of the customer is periodically analyzed to determine whether the current cumulative resource usage of the customer exceeds the new current reauthorization threshold (e.g., 835 resource units).

These and further embodiments enable the functionality described above and additional functionality. Such embodiments are described in further detail as follows.

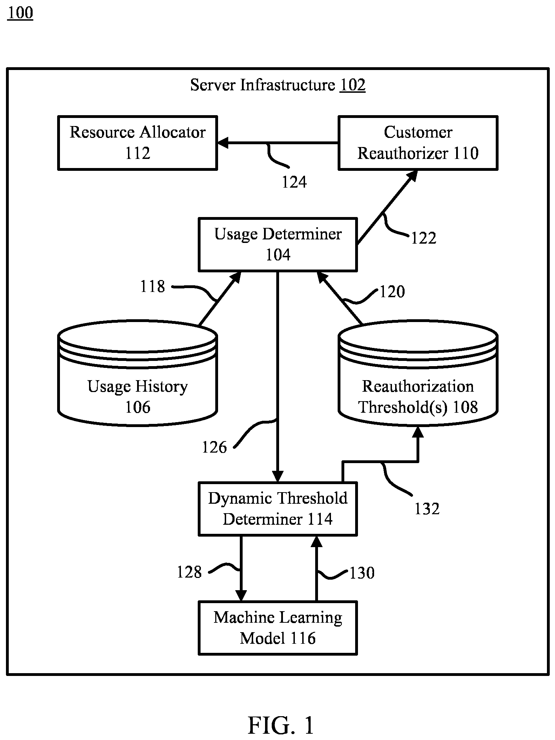

For example, FIG. 1 shows a block diagram of an example system 100 for determining a dynamic reauthorization threshold, in accordance with an embodiment. As shown in FIG. 1, system 100 includes a server infrastructure 102 comprising a usage determiner 104, a usage history 106, one or more reauthorization thresholds 108, a customer reauthorizer 110, a resource allocator 112, a dynamic threshold determiner 114, and a machine learning model 116. System 100 is described in further detail as follows.

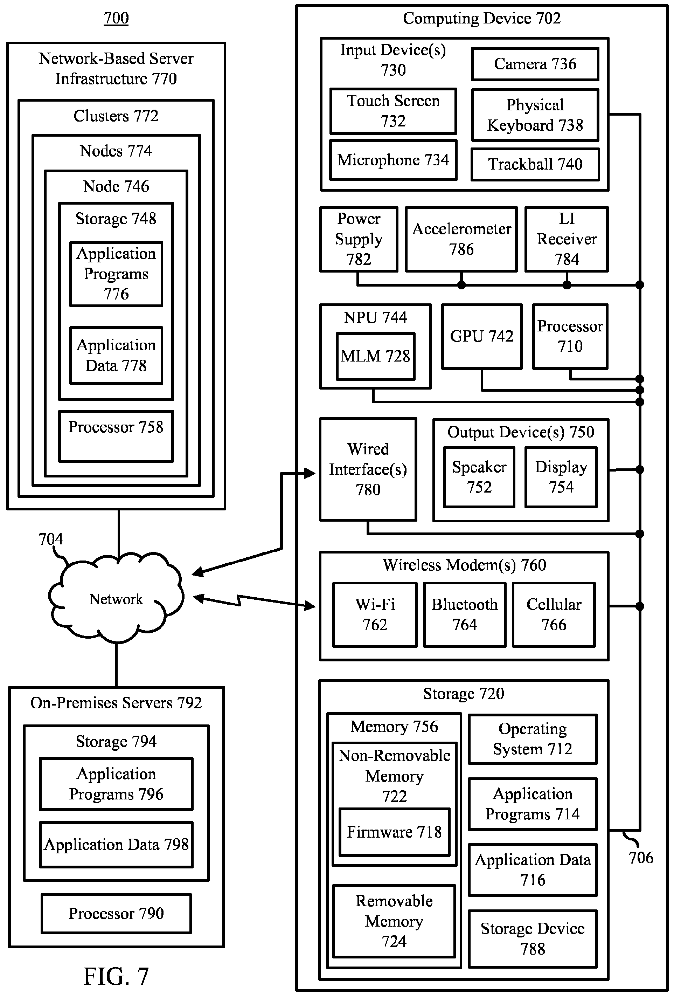

Server infrastructure 102 comprises a network-accessible server set (e.g., cloud-based environment or platform). In an embodiment, the underlying resources of server infrastructure 102 are co-located (e.g., housed in one or more nearby buildings with associated components such as backup power supplies, redundant data communications, environmental controls, etc.) to form a datacenter, are distributed across different regions, and/or are arranged in other manners. Various example implementations of server infrastructure 102 are described below in reference to FIG. 7 (e.g., network-based server infrastructure 770, and/or components thereof).

Usage determiner 104 is configured to determine whether a current cumulative resource usage 118 associated with a customer exceeds a current reauthorization threshold 120 associated with the customer. In embodiments, usage determiner 104 periodically (e.g., every 30 minutes, hour, day, etc.) determines current cumulative resource usage 118 and/or current reauthorization threshold 120 associated with the customer by accessing usage history 106 and/or reauthorization threshold(s) 108, respectively, based on an identifier (e.g., customer identifier, customer account number, etc.) associated with the customer. In embodiments, upon determining that current cumulative resource usage 118 exceeds current reauthorization threshold 120, usage determiner 104 provides a reauthorization request 122 to customer reauthorizer 110 to cause customer reauthorizer 110 to perform a customer reauthorization process for the customer. In embodiments, upon determining that current cumulative resource usage 118 exceeds current reauthorization threshold 120, usage determiner 104 provides a data structure 126, such as, but not limited to, a vector, a tuple, and/or the like, that comprises input parameters, such as, but not limited to, current cumulative resource usage 118, current reauthorization threshold 120, an initial base reauthorization threshold of the customer, a duration since the last time the customer breached a reauthorization threshold, and/or the like.

Usage history 106 is configured to store resource usage information associated with one or more customers of a cloud environment. In embodiments, usage history 106 stores resource usage history in, for example, but not limited to, a database, a log, and/or the like. In embodiments, usage history 106 stores one or more resource usage entries by associating a customer identifier with a resource units consumed, a resource usage timestamp, a type of resource consumed, and/or the like. In embodiments, usage history 106 maintains current cumulative resource usage 118 for the customer.

Reauthorization threshold(s) 108 is configured to store reauthorization thresholds associated with one or more customers of a cloud environment. In embodiments, reauthorization threshold(s) 108 stores a reauthorization threshold history in, for example, but not limited to, a database, a log, and/or the like. In embodiments, reauthorization threshold(s) 108 stores one or more reauthorization threshold entries by associating a customer identifier with a reauthorization threshold, a timestamp associated with the reauthorization threshold, and/or the like. In embodiments, reauthorization threshold(s) 108 maintains current reauthorization threshold 120 for the customer.

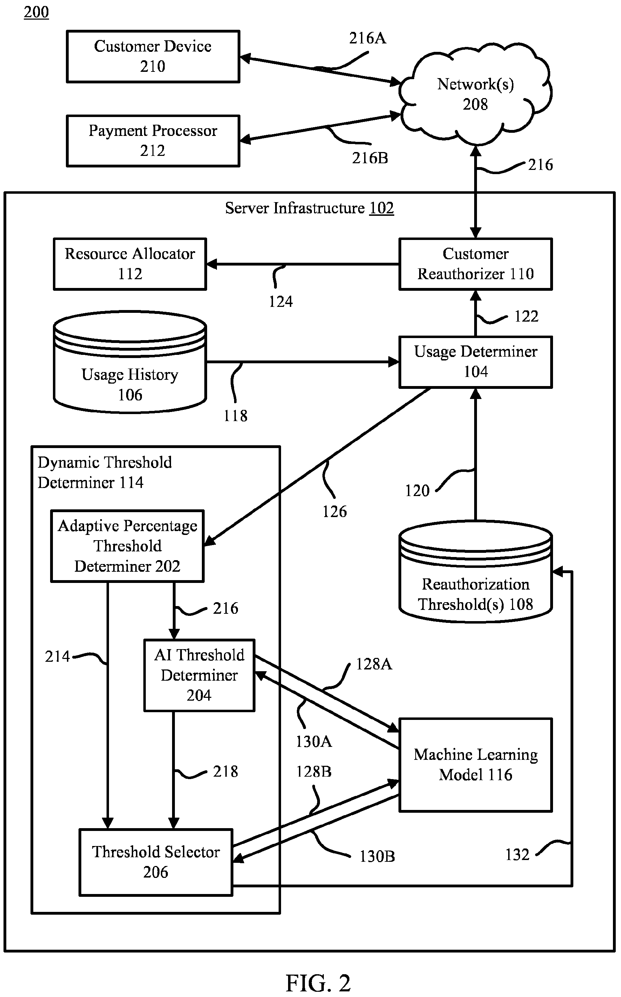

Customer reauthorizer 110 is configured to perform a customer reauthorization process. In embodiments, when (in response to) a current cumulative resource usage of a customer exceeds a current reauthorization threshold associated with the customer, customer reauthorizer 110 performs a reauthorization process by reauthenticating the customer and/or by reauthorizing a charge method associated with the customer. In embodiments, customer reauthorizer 110 charges the charge method associated with the customer for a number of resource units determined by dynamic threshold determiner 114. In embodiments, customer reauthorizer 110 provides a reauthentication result 124 to resource allocator 112. Customer reauthorizer 110 will be described in greater detail below in conjunction with FIG. 2.

Resource allocator 112 is configured to allocate and/or deallocate resources to a customer of a cloud environment. For instance, upon successful reauthorization, resource allocator 112 allocates additional resources to the customer to enable the customer to continue to consume cloud services and/or resources provided by the cloud environment. In embodiments, if a customer fails a reauthorization process, resource allocator 112 deallocates any resources already allocated to the customer to prevent the customer from consuming any more cloud services and/or resources.

Dynamic threshold determiner 114 is configured to determine a next reauthorization threshold for a customer. In embodiments, dynamic threshold determiner 114 receives data structure 126 from usage determiner 104 responsive to usage determiner 104 determining that that current cumulative resource usage 118 exceeds current reauthorization threshold 120. In embodiments, dynamic threshold determiner 114 determines a next reauthorization threshold using both an adaptive percentage algorithm and a machine learning model, and selects the next reauthorization threshold associated with a higher confidence score as the next reauthorization threshold for the customer. Dynamic threshold determiner 114 is described in greater detail below in conjunction with FIG. 2.

Machine learning model 116 is configured to provide a next reauthorization threshold for a customer based on current reauthorization threshold 120, current cumulative resource usage 118, the duration since the last time the customer breached a reauthorization threshold, and the next reauthorization threshold generated by the adaptive percentage algorithm. In embodiments, machine learning model 116 includes, for example, but not limited to, a proprietary machine learning model, a machine learning model fine-tuned to provide a next reauthorization threshold, a machine learning model augmented to provide a next reauthorization threshold, and/or the like. In embodiments, dynamic threshold determiner 114 provides one or more prompts 128 to machine learning model 116 to request a next reauthorization threshold based on current reauthorization threshold 120, current cumulative resource usage 118, the duration since the last time the customer breached a reauthorization threshold, and the next reauthorization threshold generated by the adaptive percentage algorithm. In embodiments, machine learning model 116 responds to prompt(s) 128 with one or more response(s) 130 that include the next reauthorization threshold determined by the machine learning model, a confidence score associated with the next reauthorization threshold determined by the machine learning model, and/or a confidence score associated with the next reauthorization threshold determined by the adaptive percentage algorithm.

Embodiments described herein may operate in various ways to perform reauthorization using a dynamic reauthorization threshold. For instance, FIG. 2 depicts a block diagram of a system 200 for performing reauthorization using a dynamic reauthorization threshold, in accordance with an embodiment. As shown in FIG. 2, system 200 includes server infrastructure 102, usage determiner 104, usage history 106, reauthorization threshold(s) 108, customer reauthorizer 110, resource allocator 112, dynamic threshold determiner 114, and machine learning model 116. In system 200, dynamic threshold determiner 114 further includes an adaptive percentage threshold determiner 202, an artificial intelligence (AI) threshold determiner 204, and a threshold selector 206. Furthermore system 200 further includes a customer device 210 and a payment processor 212 that are communicatively coupled to customer reauthorizer 110 via one or more networks 208. System 200 is described in further detail as follows.

Adaptive percentage threshold determiner 202 is configured to determine a percentage-based reauthorization threshold 214 based on an adaptive percentage algorithm. In embodiments, adaptive percentage threshold determiner 202 receives, from usage determiner 104, data structure 126 that comprises input parameters, such as, but not limited to, current cumulative resource usage 118, current reauthorization threshold 120, a duration since a last time the customer breached a reauthorization threshold, and/or the like. In embodiments, adaptive percentage threshold determiner 202 determines a variance of the current cumulative resource usage from the current reauthorization threshold, which indicates the degree to which the current cumulative resource usage exceeds the current reauthorization threshold.

In embodiments, adaptive percentage threshold determiner 202 determines a base incrementation percentage based on the variance. For instance, when the variance is positive (e.g., greater than zero), zero, or within a predetermined negative range (e.g., greater than -100), the adaptive percentage algorithm determines the base incrementation percentage based on a default base incrementation percentage (e.g., 25%, etc.). In embodiments, as the negative magnitude of the variance increases, the adaptive percentage algorithm determines the base incrementation percentage by reducing the default base incrementation percentage as a function of the variance. For instance, when the variance falls within a first variance range (e.g., between -100 and -200), the adaptive percentage algorithm determines the base incrementation percentage as a first reduced incrementation percentage (e.g., 20%, etc.), when the variance falls within a second variance range (e.g., between -200 and -300), the adaptive percentage algorithm determines the base incrementation percentage as a second reduced incrementation percentage (e.g., 18%, etc.), when the variance falls within a third variance range (e.g., between -300 and -400), the adaptive percentage algorithm determines the base incrementation percentage as a third reduced incrementation percentage (e.g., 16%, etc.), and when the variance falls within a fourth variance range (e.g., less than -400), the adaptive percentage algorithm determines the base incrementation percentage as a fourth reduced incrementation percentage (e.g., 14%, etc.).

In embodiments, adaptive percentage threshold determiner 202 determines an incrementation percentage based on the base incrementation percentage and a randomization factor that is a pseudorandom value determined based on the last time the customer breached a reauthorization threshold, and a seed value (e.g., 10, etc.). For instance, adaptive percentage threshold determiner 202 determines the randomization factor as a value between zero and the seed value (e.g., 10%, etc.), where the duration since the last time the customer breached a reauthorization threshold determines whether the randomization factor is closer to the lower end of the range (e.g., zero, etc.) or the higher end of the range (e.g., seed value, 10%, etc.).

In an embodiment, adaptive percentage threshold determiner 202 determines percentage-based reauthorization threshold 214 by summing an initial base reauthorization threshold and a mathematical product of current cumulative resource usage 118 and a scaling factor (e.g., $1 + Percentage_{Base}$). In embodiments, the initial base reauthorization threshold is determined based on a risk score associated with the customer, for example, but not limited to, a credit score associated with the customer, a charge history associated with the customer, and/or the like.

In embodiments, adaptive percentage threshold determiner 202 calculates a number of resource units to charge a charge method of the customer based on current cumulative resource usage 118, the randomization factor, the variance, and a predetermined authorization percentage (e.g., 50%, etc.). In embodiments, adaptive percentage threshold determiner 202 provides the number of resource units to charge customer to customer reauthorizer 110 to enable customer reauthorizer 110 to charge the number of resource units to a charge method associated with the customer for during a reauthorization process.

In an embodiment, adaptive percentage threshold determiner 202 provides, to AI threshold determiner 204, a data structure 216, such as, but not limited to, a vector, a tuple, and/or the like, comprising input parameters to enable AI threshold determiner 204 to verify percentage-based reauthorization threshold 214 using machine learning model 116.

AI threshold determiner 204 is configured to generate and provide a prompt 128A to machine learning model 116 to request a next reauthorization threshold based on current reauthorization threshold 120, current cumulative resource usage 118, the duration since the last time the customer breached a reauthorization threshold, and percentage-based reauthorization threshold 214. In embodiments, AI threshold determiner 204 receives, from adaptive threshold determiner 202, data structure 216 comprising input parameters to enable AI threshold determiner 204 to verify percentage-based reauthorization threshold 214 using machine learning model 116. In embodiments, AI threshold determiner 204 generates and provides prompt 128A (e.g., "A customer having a current resource quota of 250 resource units has consumed 450 resource units two days after exceeding their previous resource quota. Our algorithm recommends a next resource quota of 857.5 resource units. Please recommend a next resource quota for this customer.") to machine learning model 115, prompt 128A comprising current reauthorization threshold 120, current cumulative resource usage 118, the duration since the last time the customer breached a reauthorization threshold, and percentage-based reauthorization threshold 214. In embodiments, AI threshold determiner 204 receives, from machine learning model 116, a response 130A comprising an AI-generated next reauthorization threshold 218, and provides AI-generated next reauthorization threshold 218 to threshold selector 206.

Threshold selector 206 is configured to select a next reauthorization threshold based on a confidence score. In embodiments, threshold selector 206 receives percentage-based reauthorization threshold 214 from adaptive percentage threshold determiner 202 and AI-generated reauthorization threshold 218 from AI threshold determiner 204. In embodiments, threshold selector 206 generates and provides a follow-up prompt 128B (e.g., "Please provide a confidence score for the next resource quota recommended by our algorithm and a confidence score for your recommended next resource quota.") to machine learning model 116 requesting a confidence score for percentage-based reauthorization threshold 214 generated by adaptive threshold determiner 202 and a confidence score for AI-based reauthorization threshold 218 generated by machine learning model 116. In embodiments, threshold selector 206 selects a next reauthorization threshold 132 that is associated with the higher confidence score, and assigns next reauthorization threshold 132 to the customer by providing next reauthorization threshold 132 to reauthorization threshold(s) 108 for storage therein.

Network(s) 208 comprises one or more networks that communicatively couple server infrastructure 102, and/or components thereof, to customer device 210 and/or payment processor 212. Various example implementations of network(s) 208 are described below in reference to FIG. 7 (e.g., network 704, and/or components thereof).

Customer device 210 comprises one or more devices associated with a customer of the cloud computing environment. In embodiments, customer reauthorizer 110 performs a customer reauthorization process by exchanging communications 216 and/or 216A with customer device 210 to reauthenticate an account associated with the customer.

For instance, customer reauthorizer 110, in embodiments, provides a one-time passcode to customer device 210 as part of the customer reauthorization process, and require the customer to provide the one-time passcode in a response to customer reauthorizer 110 in order to continue to consume cloud services and/or resources. Various example implementations of network(s) 208 are described below in reference to FIG. 7 (e.g., computing device 702, network-based server infrastructure 770, on-premises servers 792, and/or components thereof).

Payment processor 212 comprises one or more devices associated with a payment processor of a charge method associated with the customer. In embodiments, customer reauthorizer 110 performs a customer reauthorization process by exchanging communications 216 and/or 216B with payment processor 212 to reauthorize the charge method associated with the customer. For instance, customer reauthorizer 110, in embodiments, attempts to charge the charge method associated with the customer for the number of resource units indicated by current cumulative resource usage 118. For instance, customer reauthorizer 110 attempts to charge the charge method of the customer for the number of resource units as determined by adaptive percentage threshold determiner 202 of dynamic threshold determiner 114. In embodiments, customer reauthorizer 110 attempts to pre-authorize the charge method associated with the customer for an additional number of resource units associated with an expected future consumption of cloud services and/or resources. Various example implementations of network(s) 208 are described below in reference to FIG. 7 (e.g., computing device 702, network-based server infrastructure 770, on-premises servers 792, and/or components thereof).

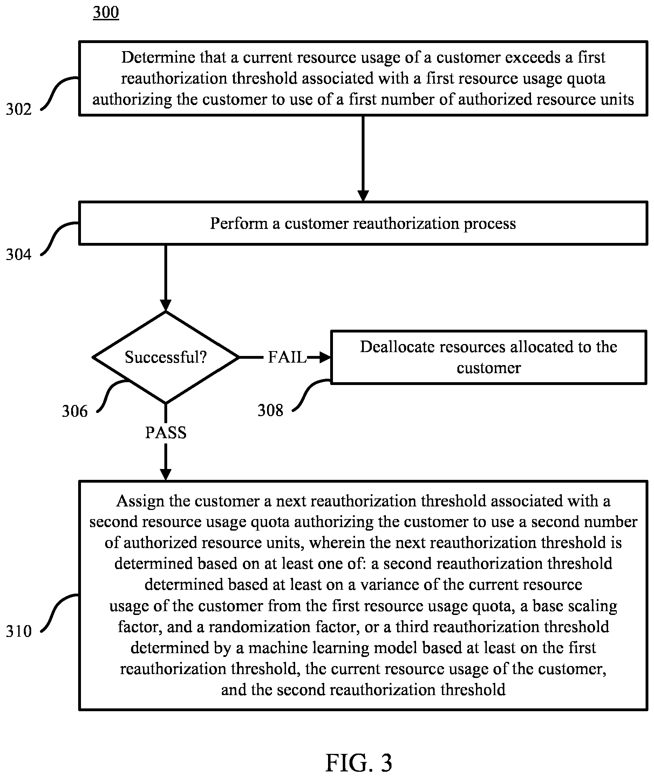

Embodiments described herein may operate in various ways to perform reauthorization using a dynamic reauthorization threshold. For instance, FIG. 3 depicts a flowchart 300 of a process performing reauthorization using a dynamic reauthorization threshold, in accordance with an embodiment. Server infrastructure 102, usage determiner 104, usage history 106, reauthorization threshold(s) 108, customer reauthorizer 110, resource allocator 112, dynamic threshold determiner 114, machine learning model 116, adaptive percentage threshold determiner 202, AI threshold determiner 204, threshold selector 206, customer device 210, and/or payment processor 212 may, for example, operate according to flowchart 300. Note that not all steps of flowchart 300 may need to be performed in all embodiments, and in some embodiments, the steps of flowchart 300 may be performed in different orders than shown. Flowchart 300 is described as follows with respect to FIGS. 1-2 for illustrative purposes.

Flowchart 300 starts at step 302. In step 302, a current resource usage of a customer is determined to exceed a first reauthorization threshold associated with a first resource usage quota authorizing the customer to use a first number of authorized resource units. For instance, usage determiner 104 determines that current cumulative resource usage 118 exceeds current reauthorization threshold 120. In embodiments, upon determining that current cumulative resource usage 118 exceeds current reauthorization threshold 120, usage determiner 104 provides a reauthorization request 122 to customer reauthorizer 110 to cause customer reauthorizer 110 to perform a customer reauthorization process for the customer.

In Step 304, a customer reauthorization process is performed. For instance, customer reauthorizer 110 performs a customer reauthorization process via communications 216 with customer device 210 and/or payment processor 212. In embodiments, customer reauthorizer 110 challenges, via communications 216A, a customer associated with customer device 210 to provide a one-time passcode in response. In embodiments, customer reauthorizer 110 attempts, via communications 216B with payment processor 212, to charge the customer charge method for a number of resource units associated with the current usage.

In Step 306, it is determined whether the customer reauthorization process is successful. For instance, customer reauthorizer 110 determines, based on communications 216, whether customer reauthorization is successful. In embodiments, customer reauthorizer 110 determines whether a customer associated with customer device 210 provides a correct one-time passcode. In embodiments, customer reauthorizer 110 determines whether payment processor 212 successfully authorizes and/or charges a customer charge method associated with the customer. If the customer reauthorization process fails, flowchart 300 proceeds to step 308, otherwise, flowchart 300 proceeds to step 310.

In Step 308, resources allocated to the customer are deallocated. For instance, resource allocator 112 deallocates resources that are allocated to the customer. Resources deallocated from the user are no longer accessible by the user to use.

In Step 310, the customer is assigned a next reauthorization threshold associated with a second resource usage quota authorizing the customer to use a second number of authorized units, wherein the next reauthorization threshold is determined based on at least one of: a second reauthorization threshold determined based at least on a variance of the current resource usage of the customer from the first resource usage quota, a base scaling factor, and a randomization factor, or a third reauthorization threshold determined by a machine learning model based at least on the first reauthorization threshold, the current resource usage of the customer, and the second reauthorization threshold. For instance, dynamic threshold determiner 114 determines next reauthorization threshold 132 using both an adaptive percentage algorithm and a machine learning model, and selects the next reauthorization threshold associated with a higher confidence score as next reauthorization threshold 132. In embodiments, adaptive percentage threshold determiner 202 determines percentage-based reauthorization threshold 214 based various input parameters, such as, but not limited to, current cumulative resource usage 118, current reauthorization threshold 120, a duration since a last time the customer breached a reauthorization threshold, and/or the like. In embodiments, AI threshold determiner 204 verifies percentage-based reauthorization threshold 214 by providing, to machine learning model 116, prompt 128A that comprises current reauthorization threshold 120, current cumulative resource usage 118, the duration since the last time the customer breached a reauthorization threshold, and percentage-based reauthorization threshold 214, and receiving, from machine learning model 116, a response 130A comprising an AI-generated reauthorization threshold 218. In embodiments, threshold selector 206 selects next reauthorization threshold 132 based on a follow-up prompt 128B requesting, from machine learning model 116, a confidence score for percentage-based reauthorization threshold 214 generated by adaptive threshold determiner 202 and a confidence score for AI-based reauthorization threshold 218 generated by machine learning model 116. In embodiments, resource allocator 112 allocates additional resources to the customer based on next reauthorization threshold 132. Resources allocated to the user become accessible by the user to use on demand.

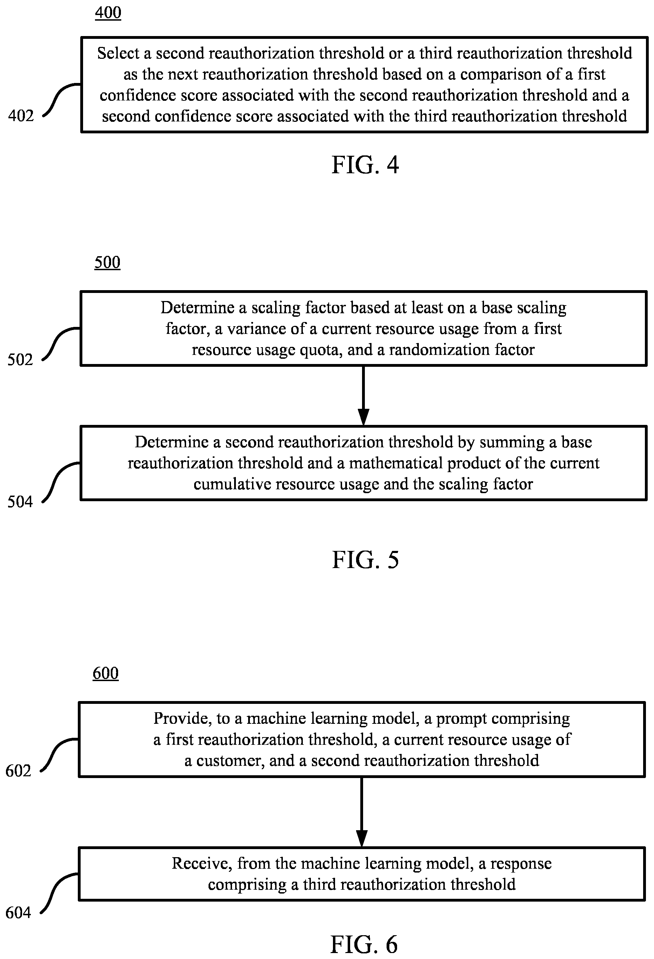

Embodiments described herein may operate in various ways to determine a dynamic reauthorization threshold. For instance, FIG. 4 depicts a flowchart 400 of a process determining a dynamic reauthorization threshold, in accordance with an embodiment. Server infrastructure 102, usage determiner 104, usage history 106, reauthorization threshold(s) 108, customer reauthorizer 110, resource allocator 112, dynamic threshold determiner 114, machine learning model 116, adaptive percentage threshold determiner 202, AI threshold determiner 204, threshold selector 206, customer device 210, and/or payment processor 212 may, for example, operate according to flowchart 400. Flowchart 400 is described as follows with respect to FIGS. 1-2 for illustrative purposes.

Flowchart 400 starts at step 402. In step 402, a second reauthorization threshold or a third reauthorization threshold is selected as the next reauthorization threshold based on a comparison of a first confidence score associated with the second reauthorization threshold and a second confidence score associated with the third reauthorization threshold. For instance, threshold selector 206 generates and provides follow-up prompt 128B requesting, from machine learning model 116, a confidence score for percentage-based reauthorization threshold 214 generated by adaptive threshold determiner 202 and a confidence score for AI-based reauthorization threshold 218 generated by machine learning model 116. In embodiments, threshold selector 206 selects next reauthorization threshold 132 that is associated with the higher confidence score, and assigns next reauthorization threshold 132 to the customer by providing next reauthorization threshold 132 to reauthorization threshold(s) 108 for storage therein.

Embodiments described herein may operate in various ways to determine a dynamic reauthorization threshold using a machine learning model. For instance, FIG. 5 depicts a flowchart 500 of a process determining a dynamic reauthorization threshold using a dynamic percentage, in accordance with an embodiment. Server infrastructure 102, usage determiner 104, usage history 106, reauthorization threshold(s) 108, dynamic threshold determiner 114, and/or adaptive percentage threshold determiner 202 may, for example, operate according to flowchart 500. Flowchart 500 is described as follows with respect to FIGS. 1-2 for illustrative purposes.

Flowchart 500 starts at step 502. In step 502, a percentage is determined based on a predetermined base percentage, and the randomization factor. For instance, adaptive percentage threshold determiner 202 determines a scaling factor by summing one (e.g.. "1") and an incrementation percentage determined based on the base incrementation percentage and a randomization factor that is a pseudorandom value determined based on the last time the customer breached a reauthorization threshold, and a seed value (e.g., 10, etc.). adaptive percentage threshold determiner 202 determines a base incrementation percentage based on the variance. For instance, when the variance is positive (e.g., greater than zero), zero, or within a predetermined negative range (e.g., greater than -100), the adaptive percentage algorithm determines the base incrementation percentage based on a default base incrementation percentage (e.g., 25%, etc.). In embodiments, as the negative magnitude of the variance increases, the adaptive percentage algorithm determines the base incrementation percentage by reducing the default base incrementation percentage as a function of the variance. For instance, when the variance falls within a first variance range (e.g., between -100 and -200), the adaptive percentage algorithm determines the base incrementation percentage as a first reduced incrementation percentage (e.g., 20%, etc.), when the variance falls within a second variance range (e.g., between -200 and -300), the adaptive percentage algorithm determines the base incrementation percentage as a second reduced incrementation percentage (e.g., 18%, etc.), when the variance falls within a third variance range (e.g., between -300 and -400), the adaptive percentage algorithm determines the base incrementation percentage as a third reduced incrementation percentage (e.g., 16%, etc.), and when the variance falls within a fourth variance range (e.g., less than -400), the adaptive percentage algorithm determines the base incrementation percentage as a fourth reduced incrementation percentage (e.g., 14%, etc.).

In Step 504, a second reauthorization threshold is determined based on the number of unauthorized resource units, a base reauthorization threshold, and the percentage. For instance, adaptive percentage threshold determiner 202 determines percentage-based reauthorization threshold 214 by summing an initial base reauthorization threshold and a mathematical product of current cumulative resource usage 118 and the scaling factor (e.g., $1 + Percentage_{Base}$).

Embodiments described herein may operate in various ways to determine a dynamic reauthorization threshold using a machine learning model. For instance, FIG. 6 depicts a flowchart 600 of a process determining a dynamic reauthorization threshold using a machine learning model, in accordance with an embodiment. Server infrastructure 102, usage determiner 104, usage history 106, reauthorization threshold(s) 108, dynamic threshold determiner 114, machine learning model 116, and/or AI threshold determiner 204 may, for example, operate according to flowchart 600. Flowchart 600 is described as follows with respect to FIGS. 1-2 for illustrative purposes.

Flowchart 600 starts at step 602. In step 602, a prompt is provided to a machine learning model, the prompt comprising a first reauthorization threshold, a current resource usage of the customer, and a second reauthorization threshold. For instance, AI threshold determiner 204 generates and provides prompt 128A (e.g., "A customer having a current resource quota of 250 resource units has consumed 450 resource units two days after exceeding their previous resource quota. Our algorithm recommends a next resource quota of 857.5 resource units. Please recommend a next resource quota for this customer.") to machine learning model 115, prompt 128A comprising current reauthorization threshold 120, current cumulative resource usage 118, the duration since the last time the customer breached a reauthorization threshold, and percentage-based reauthorization threshold 214.

In Step 604, a response is received from the machine learning model, the response comprising a third reauthorization threshold and the second confidence score. For instance, AI threshold determiner 204 receives, from machine learning model 116, a response 130A comprising an AI-generated next reauthorization threshold 218, and provides AI-generated next reauthorization threshold 218 to threshold selector 206.


III. Example Mobile Device and Computer System Implementation


Server infrastructure 102, usage determiner 104, usage history 106, reauthorization threshold(s) 108, customer reauthorizer 110, resource allocator 112, dynamic threshold determiner 114, machine learning model 116, adaptive percentage threshold determiner 202, AI threshold determiner 204, threshold selector 206, network(s) 208, customer device 210, payment processor 212, and/or the components described therein, and/or the steps of flowcharts 300, 400, 500, and/or 600 are implemented in hardware, or hardware combined with one or both of software and/or firmware. For example, server infrastructure 102, usage determiner 104, usage history 106, reauthorization threshold(s) 108, customer reauthorizer 110, resource allocator 112, dynamic threshold determiner 114, machine learning model 116, adaptive percentage threshold determiner 202, AI threshold determiner 204, threshold selector 206, network(s) 208, customer device 210, payment processor 212, and/or the components described therein, and/or the steps of flowcharts 300, 400, 500, and/or 600 are each implemented as computer program code/instructions configured to be executed in one or more processors and stored in a computer readable storage medium. Alternatively, server infrastructure 102, usage determiner 104, usage history 106, reauthorization threshold(s) 108, customer reauthorizer 110, resource allocator 112, dynamic threshold determiner 114, machine learning model 116, adaptive percentage threshold determiner 202, AI threshold determiner 204, threshold selector 206, network(s) 208, customer device 210, payment processor 212, and/or the components described therein, and/or the steps of flowcharts 300, 400, 500, and/or 600 are implemented in one or more SoCs (system on chip). An SoC includes an integrated circuit chip that includes one or more of a processor (e.g., a central processing unit (CPU), microcontroller, microprocessor, digital signal processor (DSP), etc.), memory, one or more communication interfaces, and/or further circuits, and optionally executes received program code and/or include embedded firmware to perform functions.

Embodiments disclosed herein can be implemented in one or more computing devices that are mobile (a mobile device) and/or stationary (a stationary device) and include any combination of the features of such mobile and stationary computing devices. Examples of computing devices in which embodiments are implementable are described as follows with respect to FIG. 7. FIG. 7 shows a block diagram of an exemplary computing environment 700 that includes a computing device 702. Computing device 702 is an example of server infrastructure 102, customer device 210, and/or payment processor 212, which each include one or more of the components of computing device 702. In some embodiments, computing device 702 is communicatively coupled with devices (not shown in FIG. 7) external to computing environment 700 via network 704. Network 704 comprises one or more networks such as local area networks (LANs), wide area networks (WANs), enterprise networks, the Internet, etc. In examples, network 704 includes one or more wired and/or wireless portions. In some examples, network 704 additionally or alternatively includes a cellular network for cellular communications. Computing device 702 is described in detail as follows.

Computing device 702 can be any of a variety of types of computing devices. Examples of computing device 702 include a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. In an alternative example, computing device 702 is a stationary computing device such as a desktop computer, a personal computer (PC), a stationary server device, a minicomputer, a mainframe, a supercomputer, etc.

As shown in FIG. 7, computing device 702 includes a variety of hardware and software components, including a processor 710, a storage 720, a graphics processing unit (GPU) 742, a neural processing unit (NPU) 744, one or more input devices 730, one or more output devices 750, one or more wireless modems 760, one or more wired interfaces 780, a power supply 782, a location information (LI) receiver 784, and an accelerometer 786. Storage 720 includes memory 756, which includes non-removable memory 722 and removable memory 724, and a storage device 788. Storage 720 also stores an operating system 712, application programs 714, and application data 716. Wireless modem(s) 760 include a Wi-Fi modem 762, a Bluetooth modem 764, and a cellular modem 766. Output device(s) 750 includes a speaker 752 and a display 754. Input device(s) 730 includes a touch screen 732, a microphone 734, a camera 736, a physical keyboard 738, and a trackball 740. Not all components of computing device 702 shown in FIG. 7 are present in all embodiments, additional components not shown may be present, and in a particular embodiment any combination of the components are present. In examples, components of computing device 702 are mounted to a circuit card (e.g., a motherboard) of computing device 702, integrated in a housing of computing device 702, or otherwise included in computing device 702. The components of computing device 702 are described as follows.

In embodiments, a single processor 710 (e.g., central processing unit (CPU), microcontroller, a microprocessor, signal processor, ASIC (application specific integrated circuit), and/or other physical hardware processor circuit) or multiple processors 710 are present in computing device 702 for performing such tasks as program execution, signal coding, data processing, input/output processing, power control, and/or other functions. In examples, processor 710 is a single-core or multi-core processor, and each processor core is single-threaded or multithreaded (to provide multiple threads of execution concurrently). Processor 710 is configured to execute program code stored in a computer readable medium, such as program code of operating system 712 and application programs 714 stored in storage 720. The program code is structured to cause processor 710 to perform operations, including the processes/methods disclosed herein. Operating system 712 controls the allocation and usage of the components of computing device 702 and provides support for one or more application programs 714 (also referred to as "applications" or "apps"). In examples, application programs 714 include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. In examples, processor(s) 710 includes one or more general processors (e.g., CPUs) configured with or coupled to one or more hardware accelerators, such as one or more NPUs 744 and/or one or more GPUs 742.

Any component in computing device 702 can communicate with any other component according to function, although not all connections are shown for ease of illustration. For instance, as shown in FIG. 7, bus 706 is a multiple signal line communication medium (e.g., conductive traces in silicon, metal traces along a motherboard, wires, etc.) present to communicatively couple processor 710 to various other components of computing device 702, although in other embodiments, an alternative bus, further buses, and/or one or more individual signal lines is/are present to communicatively couple components. Bus 706 represents one or more of any of several types of bus structures, including a memory bus or memory controller, a peripheral bus, an accelerated graphics port, and a processor or local bus using any of a variety of bus architectures.

Storage 720 is physical storage that includes one or both of memory 756 and storage device 788, which store operating system 712, application programs 714, and application data 716 according to any distribution. Non-removable memory 722 includes one or more of RAM (random access memory), ROM (read only memory), flash memory, a solid-state drive (SSD), a hard disk drive (e.g., a disk drive for reading from and writing to a hard disk), and/or other physical memory device type. In examples, non-removable memory 722 includes main memory and is separate from or fabricated in a same integrated circuit as processor 710. As shown in FIG. 7, non-removable memory 722 stores firmware 718 that is present to provide low-level control of hardware. Examples of firmware 718 include BIOS (Basic Input/Output System, such as on personal computers) and boot firmware (e.g., on smart phones). In examples, removable memory 724 is inserted into a receptacle of or is otherwise coupled to computing device 702 and can be removed by a user from computing device 702. Removable memory 724 can include any suitable removable memory device type, including an SD (Secure Digital) card, a Subscriber Identity Module (SIM) card, which is well known in GSM (Global System for Mobile Communications) communication systems, and/or other removable physical memory device type. In examples, one or more of storage device 788 are present that are internal and/or external to a housing of computing device 702 and are or are not removable. Examples of storage device 788 include a hard disk drive, a SSD, a thumb drive (e.g., a USB (Universal Serial Bus) flash drive), or other physical storage device.

One or more programs are stored in storage 720. Such programs include operating system 712, one or more application programs 714, and other program modules and program data. Examples of such application programs include computer program logic (e.g., computer program code/instructions) for implementing server infrastructure 102, usage determiner 104, usage history 106, reauthorization threshold(s) 108, customer reauthorizer 110, resource allocator 112, dynamic threshold determiner 114, machine learning model 116, adaptive percentage threshold determiner 202, AI threshold determiner 204, threshold selector 206, network(s) 208, customer device 210, payment processor 212, and/or each of the components described therein, as well as any of flowcharts 300, 400, 500, 600, and/or any individual steps thereof.

Storage 720 also stores data used and/or generated by operating system 712 and application programs 714 as application data 716. Examples of application data 716 include web pages, text, images, tables, sound files, video data, and other data. In examples, application data 716 is sent to and/or received from one or more network servers or other devices via one or more wired or wireless networks. Storage 720 can be used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

In examples, a user enters commands and information into computing device 702 through one or more input devices 730 and receives information from computing device 702 through one or more output devices 750. Input device(s) 730 includes one or more of touch screen 732, microphone 734, camera 736, physical keyboard 738 and/or trackball 740 and output device(s) 750 includes one or more of speaker 752 and display 754. Each of input device(s) 730 and output device(s) 750 are integral to computing device 702 (e.g., built into a housing of computing device 702) or are external to computing device 702 (e.g., communicatively coupled wired or wirelessly to computing device 702 via wired interface(s) 780 and/or wireless modem(s) 760). Further input devices 730 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 754 displays information, as well as operating as touch screen 732 by receiving user commands and/or other information (e.g., by touch, finger gestures, virtual keyboard, etc.) as a user interface. Any number of each type of input device(s) 730 and output device(s) 750 are present, including multiple microphones 734, multiple cameras 736, multiple speakers 752, and/or multiple displays 754.

In embodiments where GPU 742 is present, GPU 742 includes hardware (e.g., one or more integrated circuit chips that implement one or more of processing cores, multiprocessors, compute units, etc.) configured to accelerate computer graphics (two-dimensional (2D) and/or three-dimensional (3D)), perform image processing, and/or execute further parallel processing applications (e.g., training of neural networks, etc.). Examples of GPU 742 perform calculations related to 3D computer graphics, include 2D acceleration and framebuffer capabilities, accelerate memory-intensive work of texture mapping and rendering polygons, accelerate geometric calculations such as the rotation and translation of vertices into different coordinate systems, support programmable shaders that manipulate vertices and textures, perform oversampling and interpolation techniques to reduce aliasing, and/or support very high-precision color spaces.

In examples, NPU 744 (also referred to as an "artificial intelligence (AI) accelerator" or "deep learning processor (DLP)") is a processor or processing unit configured to accelerate artificial intelligence and machine learning applications, such as execution of machine learning (ML) model (MLM) 728. In an example, NPU 744 is configured for a data-driven parallel computing and is highly efficient at processing massive multimedia data such as videos and images and processing data for neural networks. NPU 744 is configured for efficient handling of AI-related tasks, such as speech recognition, background blurring in video calls, photo or video editing processes like object detection, etc.

In embodiments disclosed herein that implement ML models, NPU 744 can be utilized to execute such ML models, of which MLM 728 is an example. For instance, where applicable, MLM 728 is a generative AI model that generates content that is complex, coherent, and/or original. For instance, a generative AI model can create sophisticated sentences, lists, ranges, tables of data, images, essays, and/or the like. An example of a generative AI model is a language model. A language model is a model that estimates the probability of a token or sequence of tokens occurring in a longer sequence of tokens. In this context, a "token" is an atomic unit that the model is training on and making predictions on. Examples of a token include, but are not limited to, a word, a character (e.g., an alphanumeric character, a blank space, a symbol, etc.), a sub-word (e.g., a root word, a prefix, or a suffix). In other types of models (e.g., image based models) a token may represent another kind of atomic unit (e.g., a subset of an image). Examples of language models applicable to embodiments herein include large language models (LLMs), text-to-image AI image generation systems, text-to-video AI generation systems, etc. A large language model (LLM) is a language model that has a high number of model parameters. In examples, an LLM has millions, billions, trillions, or even greater numbers of model parameters. Model parameters of an LLM are the weights and biases the model learns during training. Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks).

In further examples, NPU 744 is used to train MLM 728. To train MLM 728, training data is that includes input features (attributes) and their corresponding output labels/target values (e.g., for supervised learning) is collected. A training algorithm is a computational procedure that is used so that MLM 728 learns from the training data. Parameters/-weights are internal settings of MLM 728 that are adjusted during training by the training algorithm to reduce a difference between predictions by MLM 728 and actual outcomes (e.g., output labels). In some examples, MLM 728 is set with initial values for the parameters/weights. A loss function measures a dissimilarity between predictions by MLM 728 and the target values, and the parameters/weights of MLM 728 are adjusted to minimize the loss function. The parameters/weights are iteratively adjusted by an optimization technique, such as gradient descent. In this manner, MLM 728 is generated through training by NPU 744 to be used to generate inferences based on received input feature sets for particular applications. MLM 728 is generated as a computer program or other type of algorithm configured to generate an output (e.g., a classification, a prediction/inference) based on received input features, and is stored in the form of a file or other data structure.

In examples, such training of MLM 728 by NPU 744 is supervised or unsupervised. According to supervised learning, input objects (e.g., a vector of predictor variables) and a desired output value (e.g., a human-labeled supervisory signal) train MLM 728. The training data is processed, building a function that maps new data on expected output values. Example algorithms usable by NPU 744 to perform supervised training of MLM 728 in particular implementations include support-vector machines, linear regression, logistic regression, Naive Bayes, linear discriminant analysis, decision trees, K-nearest neighbor algorithm, neural networks, and similarity learning.

In an example of supervised learning where MLM 728 is an LLM, MLM 728 can be trained by exposing the LLM to (e.g., large amounts of) text (e.g., predetermined datasets, books, articles, text-based conversations, webpages, transcriptions, forum entries, and/or any other form of text and/or combinations thereof). In examples, training data is provided from a database, from the Internet, from a system, and/or the like. Furthermore, an LLM can be fine-tuned using Reinforcement Learning with Human Feedback (RLHF), where the LLM is provided the same input twice and provides two different outputs and a user ranks which output is preferred. In this context, the user's ranking is utilized to improve the model. Further still, in example embodiments, an LLM is trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

According to unsupervised learning, MLM 728 is trained to learn patterns from unlabeled data. For instance, in embodiments where MLM 728 implements unsupervised learning techniques, MLM 728 identifies one or more classifications or clusters to which an input belongs. During a training phase of MLM 728 according to unsupervised learning, MLM 728 tries to mimic the provided training data and uses the error in its mimicked output to correct itself (i.e., correct weights and biases). In further examples, NPU 744 perform unsupervised training of MLM 728 according to one or more alternative techniques, such as Hopfield learning rule, Boltzmann learning rule, Contrastive Divergence, Wake Sleep, Variational Inference, Maximum Likelihood, Maximum A Posteriori, Gibbs Sampling, and backpropagating reconstruction errors or hidden state reparameterizations.

Note that NPU 744 need not necessarily be present in all ML model embodiments. In embodiments where ML models are present, any one or more of processor 710, GPU 742, and/or NPU 744 can be present to train and/or execute MLM 728.

One or more wireless modems 760 can be coupled to antenna(s) (not shown) of computing device 702 and can support two-way communications between processor 710 and devices external to computing device 702 through network 704, as would be understood to persons skilled in the relevant art(s). Wireless modem 760 is shown generically and can include a cellular modem 766 for communicating with one or more cellular networks, such as a GSM network for data and voice communications within a single cellular network, between cellular networks, or between the mobile device and a public switched telephone network (PSTN). In examples, wireless modem 760 also or alternatively includes other radio-based modem types, such as a Bluetooth modem 764 (also referred to as a "Bluetooth device") and/or Wi-Fi modem 762 (also referred to as an "wireless adaptor"). Wi-Fi modem 762 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 764 is configured to communicate with another Bluetooth-capable device according to the Bluetooth short-range wireless technology standard(s) such as IEEE 802.15.1 and/or managed by the Bluetooth Special Interest Group (SIG).

Computing device 702 can further include power supply 782, LI receiver 784, accelerometer 786, and/or one or more wired interfaces 780. Example wired interfaces 780 include a USB port, IEEE 1394 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 780 of computing device 702 provide for wired connections between computing device 702 and network 704, or between computing device 702 and one or more devices/peripherals when such devices/peripherals are external to computing device 702 (e.g., a pointing device, display 754, speaker 752, camera 736, physical keyboard 738, etc.). Power supply 782 is configured to supply power to each of the components of computing device 702 and receives power from a battery internal to computing device 702, and/or from a power cord plugged into a power port of computing device 702 (e.g., a USB port, an A/C power port). LI receiver 784 is useable for location determination of computing device 702 and in examples includes a satellite navigation receiver such as a Global Positioning System (GPS) receiver and/or includes other type of location determiner configured to determine location of computing device 702 based on received information (e.g., using cell tower triangulation, etc.). Accelerometer 786, when present, is configured to determine an orientation of computing device 702.

Note that the illustrated components of computing device 702 are not required or all-inclusive, and fewer or greater numbers of components can be present as would be recognized by one skilled in the art. In examples, computing device 702 includes one or more of a gyroscope, barometer, proximity sensor, ambient light sensor, digital compass, etc. In an example, processor 710 and memory 756 are co-located in a same semiconductor device package, such as being included together in an integrated circuit chip, FPGA, or system-on-chip (SOC), optionally along with further components of computing device 702.

In embodiments, computing device 702 is configured to implement any of the above-described features of flowcharts herein. Computer program logic for performing any of the operations, steps, and/or functions described herein is stored in storage 720 and executed by processor 710.

In some embodiments, server infrastructure 770 is present in computing environment 700 and is communicatively coupled with computing device 702 via network 704. Server infrastructure 770, when present, is a network-accessible server set (e.g., a cloud-based environment or platform). As shown in FIG. 7, server infrastructure 770 includes clusters 772. Each of clusters 772 comprises a group of one or more compute nodes and/or a group of one or more storage nodes. For example, as shown in FIG. 7, cluster 772 includes nodes 774. Each of nodes 774 are accessible via network 704 (e.g., in a "cloud-based" embodiment) to build, deploy, and manage applications and services. In examples, any of nodes 774 is a storage node that comprises a plurality of physical storage disks, SSDs, and/or other physical storage devices that are accessible via network 704 and are configured to store data associated with the applications and services managed by nodes 774.

Each of nodes 774, as a compute node, comprises one or more server computers, server systems, and/or computing devices. For instance, a node 774 in accordance with an embodiment includes one or more of the components of computing device 702 disclosed herein. Each of nodes 774 is configured to execute one or more software applications (or "applications") and/or services and/or manage hardware resources (e.g., processors, memory, etc.), which are utilized by users (e.g., customers) of the network-accessible server set. In examples, as shown in FIG. 7, nodes 774 includes a node 746 that includes storage 748 and/or one or more of a processor 758 (e.g., similar to processor 710, GPU 742, and/or NPU 744 of computing device 702). Storage 748 stores application programs 776 and application data 778. Processor(s) 758 operate application programs 776 which access and/or generate related application data 778. In an implementation, nodes such as node 746 of nodes 774 operate or comprise one or more virtual machines, with each virtual machine emulating a system architecture (e.g., an operating system), in an isolated manner, upon which applications such as application programs 776 are executed.

In embodiments, one or more of clusters 772 are located/co-located (e.g., housed in one or more nearby buildings with associated components such as backup power supplies, redundant data communications, environmental controls, etc.) to form a datacenter, or are arranged in other manners. Accordingly, in an embodiment, one or more of clusters 772 are included in a datacenter in a distributed collection of datacenters. In embodiments, exemplary computing environment 700 comprises part of a cloud-based platform.

In an embodiment, computing device 702 accesses application programs 776 for execution in any manner, such as by a client application and/or a browser at computing device 702.

In an example, for purposes of network (e.g., cloud) backup and data security, computing device 702 additionally and/or alternatively synchronizes copies of application programs 714 and/or application data 716 to be stored at network-based server infrastructure 770 as application programs 776 and/or application data 778. In examples, operating system 712 and/or application programs 714 include a file hosting service client configured to synchronize applications and/or data stored in storage 720 at network-based server infrastructure 770.

In some embodiments, on-premises servers 792 are present in computing environment 700 and are communicatively coupled with computing device 702 via network 704. On-premises servers 792, when present, are hosted within an organization's infrastructure and, in many cases, physically onsite of a facility of that organization. On-premises servers 792 are controlled, administered, and maintained by IT (Information Technology) personnel of the organization or an IT partner to the organization. Application data 798 can be shared by on-premises servers 792 between computing devices of the organization, including computing device 702 (when part of an organization) through a local network of the organization, and/or through further networks accessible to the organization (including the Internet). Furthermore, in examples, on-premises servers 792 serve applications such as application programs 796 to the computing devices of the organization, including computing device 702. Accordingly, in examples, on-premises servers 792 include storage 794 (which includes one or more physical storage devices such as storage disks and/or SSDs) for storage of application programs 796 and application data 798 and include a processor 790 (e.g., similar to processor 710, GPU 742, and/or NPU 744 of computing device 702) for execution of application programs 796. In some embodiments, multiple processors 790 are present for execution of application programs 796 and/or for other purposes. In further examples, computing device 702 is configured to synchronize copies of application programs 714 and/or application data 716 for backup storage at on-premises servers 792 as application programs 796 and/or application data 798.

Embodiments described herein may be implemented in one or more of computing device 702, network-based server infrastructure 770, and on-premises servers 792. For example, in some embodiments, computing device 702 is used to implement systems, clients, or devices, or components/subcomponents thereof, disclosed elsewhere herein. In other embodiments, a combination of computing device 702, network-based server infrastructure 770, and/or on-premises servers 792 is used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 720. Such computer-readable media and/or storage media are distinguished from and non-overlapping with communication media, propagating signals, and signals per se. Stated differently, "computer program medium," "computer-readable medium," "computer-readable storage medium," and "computer-readable storage device" do not encompass communication media, propagating signals, and signals per se. Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 714) are stored in storage 720. Such computer programs can also be received via wired interface(s) 760 and/or wireless modem(s) 760 over network 704. Such computer programs, when executed or loaded by an application, enable computing device 702 to implement features of embodiments discussed herein. Accordingly, such computer programs represent controllers of the computing device 702.

Embodiments are also directed to computer program products comprising computer code or instructions stored on any computer-readable medium or computer-readable storage medium. Such computer program products include the physical storage of storage 720 as well as further physical storage types.

IV. Additional Example Embodiments

In embodiments, a system comprises a processor; and a memory device comprising program code structured to cause the processor to: determine that a current resource usage of a customer exceeds a first reauthorization threshold associated with a first resource usage quota authorizing the customer to use a first number of authorized resource units; perform a customer reauthorization process; responsive to the customer passing the reauthorization process, assign the customer a next reauthorization threshold associated with a second resource usage quota authorizing the customer to use a second number of authorized resource units; and responsive to the customer failing the reauthorization process, deallocate resources allocated to the customer, wherein the next reauthorization threshold is determined based on at least one of: a second reauthorization threshold determined based at least on a variance of the current resource usage of the customer from the first resource usage quota, a base scaling factor, and a randomization factor, or a third reauthorization threshold determined by a machine learning model based at least on the first reauthorization threshold, the current resource usage of the customer, and the second reauthorization threshold.

In embodiments, to determine the next reauthorization threshold, the program code is structured to cause the processor to: select the second reauthorization threshold or the third reauthorization threshold as the next reauthorization threshold based on a comparison of a first confidence score associated with the second reauthorization threshold and a second confidence score associated with the third reauthorization threshold.

In embodiments, to determine the next reauthorization threshold, the program code is structured to cause the processor to: determine a scaling factor based at least on the base scaling factor, the variance of the current resource usage from the first resource usage quota, and the randomization factor; and determine the second reauthorization threshold by adding a base reauthorization threshold to a mathematical product of the current cumulative resource usage and the scaling factor.

In embodiments, the randomization factor comprises a pseudorandom value determined based on at least one of: a duration between reauthorization events associated with the customer; or a frequency of reauthorization events associated with the customer.

In embodiments, to determine the third reauthorization threshold, the program code is structured to cause the processor to: provide, to the machine learning model, a prompt comprising the first reauthorization threshold, the current resource usage of the customer, and the second reauthorization threshold; and receive, from the machine learning model, a response comprising the third reauthorization threshold.

In embodiments, the machine learning model comprises a large language model.

In embodiments, to perform a customer reauthorization process, the program code is structured to cause the processor to at least one of: reauthenticate an account of the customer using a one-time passcode; or reauthorize a charge method associated with the customer.

In embodiments, a method comprises: determining that a current resource usage of a customer exceeds a first reauthorization threshold associated with a first resource usage quota authorizing the customer to use a first number of authorized resource units; performing a customer reauthorization process; responsive to the customer passing the reauthorization process, assigning the customer a next reauthorization threshold associated with a second resource usage quota authorizing the customer to use a second number of authorized resource units; and responsive to the customer failing the reauthorization process, deallocating resources allocated to the customer, wherein the next reauthorization threshold is determined based on at least one of: a second reauthorization threshold determined based at least on a variance of the current resource usage of the customer from the first resource usage quota, a base scaling factor, and a randomization factor, or a third reauthorization threshold determined by a machine learning model based at least on the first reauthorization threshold, the current resource usage of the customer, and the second reauthorization threshold.

In embodiments, assigning the customer a next reauthorization threshold comprises: selecting the second reauthorization threshold or the third reauthorization threshold as the next reauthorization threshold based on a comparison of a first confidence score associated with the second reauthorization threshold and a second confidence score associated with the third reauthorization threshold.

In embodiments, assigning the customer a next reauthorization threshold comprises:
determining a scaling factor based at least on the base scaling factor, the variance of the current resource usage from the first resource usage quota, and the randomization factor; and determining the second reauthorization threshold by adding a base reauthorization threshold to a mathematical product of the current cumulative resource usage and the scaling factor.

In embodiments, the randomization factor comprises a pseudorandom value determined based on at least one of: a duration between reauthorization events associated with the customer; or a frequency of reauthorization events associated with the customer.

In embodiments, assigning the customer a next reauthorization threshold comprises:
providing, to the machine learning model, a prompt comprising the first reauthorization threshold, the current resource usage of the customer, and the second reauthorization threshold; and receiving, from the machine learning model, a response comprising the third reauthorization threshold and the second confidence score.

In embodiments, the machine learning model comprises a large language model.

In embodiments, performing a customer reauthorization process comprises at least one of: reauthenticating an account of the customer using a one-time passcode; or reauthorizing a charge method associated with the customer.

In embodiments, a computer-readable storage medium comprises executable instructions that, when executed by a processor, cause the processor to: determine that a current resource usage of a customer exceeds a first reauthorization threshold associated with a first resource usage quota authorizing the customer to use a first number of authorized resource units; perform a customer reauthorization process; responsive to the customer passing the reauthorization process, assign the customer a next reauthorization threshold associated with a second resource usage quota authorizing the customer to use a second number of authorized resource units; and responsive to the customer failing the reauthorization process, deallocate resources allocated to the customer, wherein the next reauthorization threshold is determined based on at least one of: a second reauthorization threshold determined based at least on a variance of the current resource usage of the customer from the first resource usage quota, a base scaling factor, and a randomization factor, or a third reauthorization threshold determined by a machine learning model based at least on the first reauthorization threshold, the current resource usage of the customer, and the second reauthorization threshold.

In embodiments, to determine the next reauthorization threshold, the executable instructions, when executed by the processor, cause the processor to: select the second reauthorization threshold or the third reauthorization threshold as the next reauthorization threshold based on a comparison of a first confidence score associated with the second reauthorization threshold and a second confidence score associated with the third reauthorization threshold.

In embodiments, to determine the next reauthorization threshold, the executable instructions, when executed by the processor, cause the processor to: determine a scaling factor based at least on the base scaling factor, the variance of the current resource usage from the first resource usage quota, and the randomization factor; and determine the second reauthorization threshold by adding a base reauthorization threshold to a mathematical product of the current cumulative resource usage and the scaling factor.

In embodiments, to determine the next reauthorization threshold, the executable instructions, when executed by the processor, cause the processor to: provide, to the machine learning model, a prompt comprising the first reauthorization threshold, the current resource usage of the customer, and the second reauthorization threshold; and receive, from the machine learning model, a response comprising the third reauthorization threshold.

In embodiments, the machine learning model comprises a large language model.

In embodiments, to perform a customer reauthorization process, the executable instructions, when executed by the processor, cause the processor to at least one of: reauthenticate an account of the customer using a one-time passcode; or reauthorize a charge method associated with the customer.

V. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

In the discussion, unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of the embodiment for an application for which it is intended. Furthermore, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

While various embodiments of the present disclosure have been described above, it should be understood that they have been presented by way of example only, and not limitation. It will be understood by those skilled in the relevant art(s) that various changes in form and details may be made therein without departing from the spirit and scope of the invention as defined in the appended claims. Accordingly, the breadth and scope of the present invention should not be limited by any of the above-described exemplary embodiments, but should be defined only in accordance with the following claims and their equivalents.

**The following is a list of further preferred embodiments of the invention:**

Embodiment 1. A system (102, 702, 770, 792) comprising:

a processor (710, 742, 744, 758, 790); and

a memory device (720, 748, 794) comprising program code (714, 776, 796) structured to cause the processor (710, 742, 744, 758, 790) to:

determine (302) that a current resource usage (118) of a customer exceeds a first reauthorization threshold (120) associated with a first resource usage quota authorizing the customer to use a first number of authorized resource units;

perform (304) a customer reauthorization process;

responsive to the customer passing the reauthorization process, assign (310) the customer a next reauthorization threshold (132) associated with a second resource usage quota authorizing the customer to use a second number of authorized resource units; and

responsive to the customer failing the reauthorization process, deallocate (308) resources allocated to the customer,

wherein the next reauthorization threshold (132) is determined based on at least one of:

a second reauthorization threshold (214) determined based at least on a variance of the current resource usage of the customer from the first resource usage quota, a base scaling factor, and a randomization factor, or

a third reauthorization threshold (218) determined by a machine learning model (116) based at least on the first reauthorization threshold (120), the current resource usage (118) of the customer, and the second reauthorization threshold (214).

Embodiment 2. The system of embodiment 1, wherein, to determine the next reauthorization threshold, the program code is structured to cause the processor to:

select the second reauthorization threshold or the third reauthorization threshold as the next reauthorization threshold based on a comparison of a first confidence score associated with the second reauthorization threshold and a second confidence score associated with the third reauthorization threshold.

Embodiment 3. The system of embodiment 1, wherein, to determine the next reauthorization threshold, the program code is structured to cause the processor to:

determine a scaling factor based at least on the base scaling factor, the variance of the current resource usage from the first resource usage quota, and the randomization factor; and

determine the second reauthorization threshold by adding a base reauthorization threshold to a mathematical product of the current cumulative resource usage and the scaling factor.

Embodiment 4. The system of embodiment 1, wherein the randomization factor comprises a pseudorandom value determined based on at least one of:

a duration between reauthorization events associated with the customer; or

a frequency of reauthorization events associated with the customer.

Embodiment 5. The system of embodiment 1, wherein, to determine the third reauthorization threshold, the program code is structured to cause the processor to:

provide, to the machine learning model, a prompt comprising the first reauthorization threshold, the current resource usage of the customer, and the second reauthorization threshold; and

receive, from the machine learning model, a response comprising the third reauthorization threshold.

Embodiment 6. The system of embodiment 1, wherein the machine learning model comprises a large language model.

Embodiment 7. The system of embodiment 1, wherein, to perform a customer reauthorization process, the program code is structured to cause the processor to at least one of:

reauthenticate an account of the customer using a one-time passcode; or

reauthorize a charge method associated with the customer.

Embodiment 8. A method comprising:

determining (302) that a current resource usage (118) of a customer exceeds a first reauthorization threshold (120) associated with a first resource usage quota authorizing the customer to use a first number of authorized resource units;

performing (304) a customer reauthorization process;

responsive to the customer passing the reauthorization process, assigning (310) the customer a next reauthorization threshold (132) associated with a second resource usage quota authorizing the customer to use a second number of authorized resource units; and

responsive to the customer failing the reauthorization process, deallocating (308) resources allocated to the customer,

wherein the next reauthorization threshold (132) is determined based on at least one of:

a second reauthorization threshold (214) determined based at least on a variance of the current resource usage of the customer from the first resource usage quota, a base scaling factor, and a randomization factor, or

a third reauthorization threshold (218) determined by a machine learning model (116) based at least on the first reauthorization threshold (120), the current resource usage (118) of the customer, and the second reauthorization threshold (214).

Embodiment 9. The method of embodiment 8, wherein said assigning the customer a next reauthorization threshold comprises:
selecting the second reauthorization threshold or the third reauthorization threshold as the next reauthorization threshold based on a comparison of a first confidence score associated with the second reauthorization threshold and a second confidence score associated with the third reauthorization threshold.

Embodiment 10. The method of embodiment 8, wherein said assigning the customer a next reauthorization threshold comprises:

determining a scaling factor based at least on the base scaling factor, the variance of the current resource usage from the first resource usage quota, and the randomization factor; and

determining the second reauthorization threshold by adding a base reauthorization threshold to a mathematical product of the current cumulative resource usage and the scaling factor.

Embodiment 11. The method of embodiment 8, wherein the randomization factor comprises a pseudorandom value determined based on at least one of:

a duration between reauthorization events associated with the customer; or

a frequency of reauthorization events associated with the customer.

Embodiment 12. The method of embodiment 8, wherein assigning the customer a next reauthorization threshold comprises:

providing, to the machine learning model, a prompt comprising the first reauthorization threshold, the current resource usage of the customer, and the second reauthorization threshold; and

receiving, from the machine learning model, a response comprising the third reauthorization threshold and the second confidence score.

Embodiment 13. The method of embodiment 8, wherein the machine learning model comprises a large language model.

Embodiment 14. The method of embodiment 8, wherein said performing a customer reauthorization process comprises at least one of:

reauthenticating an account of the customer using a one-time passcode; or
reauthorizing a charge method associated with the customer.

Embodiment 15. A computer-readable storage medium (720, 748, 794) comprising executable instructions (714, 776, 796) that, when executed by a processor (710, 742, 744, 758, 790), cause the processor (710, 742, 744, 758, 790) to:

determine (302) that a current resource usage (118) of a customer exceeds a first reauthorization threshold (120) associated with a first resource usage quota authorizing the customer to use a first number of authorized resource units;

perform (304) a customer reauthorization process;

responsive to the customer passing the reauthorization process, assign (310) the customer a next reauthorization threshold (132) associated with a second resource usage quota authorizing the customer to use a second number of authorized resource units; and

responsive to the customer failing the reauthorization process, deallocate (308) resources allocated to the customer,

wherein the next reauthorization threshold (132) is determined based on at least one of:

a second reauthorization threshold (214) determined based at least on a variance of the current resource usage of the customer from the first resource usage quota, a base scaling factor, and a randomization factor, or

a third reauthorization threshold (218) determined by a machine learning model (116) based at least on the first reauthorization threshold (120), the current resource usage (118) of the customer, and the second reauthorization threshold (214).

Embodiment 16. The computer-readable storage medium of embodiment 15, wherein, to determine the next reauthorization threshold, the executable instructions, when executed by the processor, cause the processor to: select the second reauthorization threshold or the third reauthorization threshold as the next reauthorization threshold based on a comparison of a first confidence score associated with the second reauthorization threshold and a second confidence score associated with the third reauthorization threshold.

Embodiment 17. The computer-readable storage medium of embodiment 15, wherein, to determine the next reauthorization threshold, the executable instructions, when executed by the processor, cause the processor to:

determine a scaling factor based at least on the base scaling factor, the variance of the current resource usage from the first resource usage quota, and the randomization factor; and

determine the second reauthorization threshold by adding a base reauthorization threshold to a mathematical product of the current cumulative resource usage and the scaling factor.

Embodiment 18. The computer-readable storage medium of embodiment 15, wherein, to determine the next reauthorization threshold, the executable instructions, when executed by the processor, cause the processor to:

provide, to the machine learning model, a prompt comprising the first reauthorization threshold, the current resource usage of the customer, and the second reauthorization threshold; and

receive, from the machine learning model, a response comprising the third reauthorization threshold.

Embodiment 19. The computer-readable storage medium of embodiment 15, wherein the machine learning model comprises a large language model.

Embodiment 20. The computer-readable storage medium of embodiment 15, wherein, to perform a customer reauthorization process, the executable instructions, when executed by the processor, cause the processor to at least one of:

reauthenticate an account of the customer using a one-time passcode; or

reauthorize a charge method associated with the customer.

## Claims

1. A system (102, 702, 770, 792) comprising:

a processor (710, 742, 744, 758, 790); and
a memory device (720, 748, 794) comprising program code (714, 776, 796) structured to cause the processor (710, 742, 744, 758, 790) to:

determine (302) that a current resource usage (118) of a customer exceeds a first reauthorization threshold (120) associated with a first resource usage quota authorizing the customer to use a first number of authorized resource units;

perform (304) a customer reauthorization process;

responsive to the customer passing the reauthorization process, assign (310) the customer a next reauthorization threshold (132) associated with a second resource usage quota authorizing the customer to use a second number of authorized resource units; and

responsive to the customer failing the reauthorization process, deallocate (308) resources allocated to the customer,

wherein the next reauthorization threshold (132) is determined based on at least one of:

a second reauthorization threshold (214) determined based at least on a variance of the current resource usage of the customer from the first resource usage quota, a base scaling factor, and a randomization factor, or

a third reauthorization threshold (218) determined by a machine learning model (116) based at least on the first reauthorization threshold (120), the current resource usage (118) of the customer, and the second reauthorization threshold (214).

2. The system of claim 1, wherein, to determine the next reauthorization threshold, the program code is structured to cause the processor to:

select the second reauthorization threshold or the third reauthorization threshold as the next reauthorization threshold based on a comparison of a first confidence score associated with the second reauthorization threshold and a second confidence score associated with the third reauthorization threshold.

3. The system of one of claims 1 or 2, wherein, to determine the next reauthorization threshold, the program code is structured to cause the processor to:

determine a scaling factor based at least on the base scaling factor, the variance of the current resource usage from the first resource usage quota, and the randomization factor; and

determine the second reauthorization threshold by adding a base reauthorization threshold to a mathematical product of the current cumulative resource usage and the scaling factor.

4. The system of one of claims 1 to 3, wherein the randomization factor comprises a pseudorandom value determined based on at least one of:

a duration between reauthorization events associated with the customer; or

a frequency of reauthorization events associated with the customer.

5. The system of one of claims 1 to 4, wherein, to determine the third reauthorization threshold, the program code is structured to cause the processor to:

provide, to the machine learning model, a prompt comprising the first reauthorization threshold, the current resource usage of the customer, and the second reauthorization threshold; and

receive, from the machine learning model, a response comprising the third reauthorization threshold.

6. The system of one of claims 1 to 5, wherein the machine learning model comprises a large language model.

7. The system of one of claims 1 to 6, wherein, to perform a customer reauthorization process, the program code is structured to cause the processor to at least one of:

reauthenticate an account of the customer using a one-time passcode; or

reauthorize a charge method associated with the customer.

8. A method comprising:

determining (302) that a current resource usage (118) of a customer exceeds a first reauthorization threshold (120) associated with a first resource usage quota authorizing the customer to use a first number of authorized resource units;

performing (304) a customer reauthorization process;

responsive to the customer passing the reauthorization process, assigning (310) the customer a next reauthorization threshold (132) associated with a second resource usage quota authorizing the customer to use a second number of authorized resource units; and

responsive to the customer failing the reauthorization process, deallocating (308) resources allocated to the customer,

wherein the next reauthorization threshold (132) is determined based on at least one of:

a second reauthorization threshold (214) determined based at least on a variance of the current resource usage of the customer from the first resource usage quota, a base scaling factor, and a randomization factor, or

a third reauthorization threshold (218) determined by a machine learning model (116) based at least on the first reauthorization threshold (120), the current resource usage (118) of the customer, and the second reauthorization threshold (214).

9. The method of claim 8, wherein said assigning the customer a next reauthorization threshold comprises:

selecting the second reauthorization threshold or the third reauthorization threshold as the next reauthorization threshold based on a comparison of a first confidence score associated with the second reauthorization threshold and a second confidence score associated with the third reauthorization threshold.

10. The method of one of claims 8 or 9, wherein said assigning the customer a next reauthorization threshold comprises:

determining a scaling factor based at least on the base scaling factor, the variance of the current resource usage from the first resource usage quota, and the randomization factor; and

determining the second reauthorization threshold by adding a base reauthorization threshold to a mathematical product of the current cumulative resource usage and the scaling factor.

11. The method of one of claims 8 to 10, wherein the randomization factor comprises a pseudorandom value determined based on at least one of:

a duration between reauthorization events associated with the customer; or

a frequency of reauthorization events associated with the customer.

12. The method of one of claims 8 to 11, wherein assigning the customer a next reauthorization threshold comprises:

providing, to the machine learning model, a prompt comprising the first reauthorization threshold, the current resource usage of the customer, and the second reauthorization threshold; and

receiving, from the machine learning model, a response comprising the third reauthorization threshold and the second confidence score.

13. The method of one of claims 8 to 12, wherein the machine learning model comprises a large language model, or wherein said performing a customer reauthorization process comprises at least one of:

reauthenticating an account of the customer using a one-time passcode; or

reauthorizing a charge method associated with the customer.

14. A computer-readable storage medium (720, 748, 794) comprising executable instructions (714, 776, 796) that, when executed by a processor (710, 742, 744, 758, 790), cause the processor (710, 742, 744, 758, 790) to:

determine (302) that a current resource usage (118) of a customer exceeds a first reauthorization threshold (120) associated with a first resource usage quota authorizing the customer to use a first number of authorized resource units;

perform (304) a customer reauthorization process;

responsive to the customer passing the reauthorization process, assign (310) the customer a next reauthorization threshold (132) associated with a second resource usage quota authorizing the customer to use a second number of authorized resource units; and

responsive to the customer failing the reauthorization process, deallocate (308) resources allocated to the customer,

wherein the next reauthorization threshold (132) is determined based on at least one of:

a second reauthorization threshold (214) determined based at least on a variance of the current resource usage of the customer from the first resource usage quota, a base scaling factor, and a randomization factor, or

a third reauthorization threshold (218) determined by a machine learning model (116) based at least on the first reauthorization threshold (120), the current resource usage (118) of the customer, and the second reauthorization threshold (214).

15. The computer-readable storage medium of claim 14, wherein, to determine the next reauthorization threshold, the executable instructions, when executed by the processor, cause the processor to:

select the second reauthorization threshold or the third reauthorization threshold as the next reauthorization threshold based on a comparison of a first confidence score associated with the second reauthorization threshold and a second confidence score associated with the third reauthorization threshold, or

wherein, to determine the next reauthorization threshold, the executable instructions, when executed by the processor, cause the processor to:

determine a scaling factor based at least on the base scaling factor, the variance of the current resource usage from the first resource usage quota, and the randomization factor; and

determine the second reauthorization threshold by adding a base reauthorization threshold to a mathematical product of the current cumulative resource usage and the scaling factor, or

wherein, to determine the next reauthorization threshold, the executable instructions, when executed by the processor, cause the processor to:

provide, to the machine learning model, a prompt comprising the first reauthorization threshold, the current resource usage of the customer, and the second reauthorization threshold; and

receive, from the machine learning model, a response comprising the third reauthorization threshold, or

wherein the machine learning model comprises a large language model, or

wherein, to perform a customer reauthorization process, the executable instructions, when executed by the processor, cause the processor to at least one of:

reauthenticate an account of the customer using a one-time passcode; or

reauthorize a charge method associated with the customer.

100

Server Infrastructure 102

Resource Allocator 112

Customer Reauthorizer 110

124

Usage Determiner 104

122

118

120

Usage History 106

Reauthorization Threshold(s) 108

126

Dynamic Threshold Determiner 114

132

128

130

Machine Learning Model 116

FIG. 1

200

FIG. 2

300

Determine that a current resource usage of a customer exceeds a first reauthorization threshold associated with a first resource usage quota authorizing the customer to use of a first number of authorized resource units

302

Perform a customer reauthorization process

304

Successful?

306

FAIL

Deallocate resources allocated to the customer

308

PASS

Assign the customer a next reauthorization threshold associated with a second resource usage quota authorizing the customer to use a second number of authorized resource units, wherein the next reauthorization threshold is determined based on at least one of: a second reauthorization threshold determined based at least on a variance of the current resource usage of the customer from the first resource usage quota, a base scaling factor, and a randomization factor, or a third reauthorization threshold determined by a machine learning model based at least on the first reauthorization threshold, the current resource usage of the customer, and the second reauthorization threshold

310

FIG. 3

400

Select a second reauthorization threshold or a third reauthorization threshold as the next reauthorization threshold based on a comparison of a first confidence score associated with the second reauthorization threshold and a second confidence score associated with the third reauthorization threshold

402

FIG. 4

500

Determine a scaling factor based at least on a base scaling factor, a variance of a current resource usage from a first resource usage quota, and a randomization factor

502

Determine a second reauthorization threshold by summing a base reauthorization threshold and a mathematical product of the current cumulative resource usage and the scaling factor

504

FIG. 5

600

Provide, to a machine learning model, a prompt comprising a first reauthorization threshold, a current resource usage of a customer, and a second reauthorization threshold

602

Receive, from the machine learning model, a response comprising a third reauthorization threshold

604

FIG. 6

700

Network-Based Server
Infrastructure 770

Clusters 772

Nodes 774

Node 746

Storage 748

Application
Programs
776

Application
Data 778

Processor 758

704

Network

On-Premises Servers 792

Storage 794

Application
Programs 796

Application Data 798

Processor 790

FIG. 7

Computing Device 702

Input Device(s)
730

Camera 736

Touch Screen
732

Physical
Keyboard 738

Microphone 734

Trackball 740

Power
Supply
782

Accelerometer
786

LI
Receiver
784

NPU 744

MLM 728

GPU 742

Processor
710

Wired
Interface(s)
780

Output Device(s) 750

Speaker
752

Display
754

Wireless Modem(s) 760

Wi-Fi
762

Bluetooth
764

Cellular
766

Storage 720

Memory 756

Non-Removable
Memory
722

Firmware 718

Operating
System 712

Application
Programs 714

Application Data
716

706

Removable
Memory
724

Storage Device
788

Europäisches
Patentamt

European
Patent Office

Office européen
des brevets

# EUROPEAN SEARCH REPORT

**Application Number**

EP 25 20 3017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/232786 A1 (KUZKIN MAXIM [US] ET AL) 16 August 2018 (2018-08-16) * figures 1a, 7a, 10 * * paragraph [0103] * | 1-15 | INV. H04L9/40 H04L67/10 G06F9/50 G06Q20/14 |
| X | WO 2017/212338 A1 (ALCATEL LUCENT [FR]) 14 December 2017 (2017-12-14) * figure 8 * * paragraphs [0127] - [0129], [0134] - [0135] * | 1-15 | G06Q30/04 G06Q30/06 G06Q50/10 H04L12/14 H04M15/00 |
| X | US 11 128 716 B1 (YAN LIXIA [US] ET AL) 21 September 2021 (2021-09-21) * column 1, lines 46-64 * | 1-15 | |
| X | US 9 959 152 B2 (MATRIXX SOFTWARE INC [US]) 1 May 2018 (2018-05-01) * column 3, lines 41-53 * * column 5, lines 60-67 * | 1-15 | |

**TECHNICAL FIELDS SEARCHED (IPC)**

H04L
G07G
G06Q
G06F
H04W
H04M

The present search report has been drawn up for all claims

| Place of search | Date of completion of the search | Examiner |
|---|---|---|
| Munich | 23 October 2025 | Jeampierre, Gérald |

EPO FORM 1503 03.82 (P04C01)

## ANNEX TO THE EUROPEAN SEARCH REPORT
## ON EUROPEAN PATENT APPLICATION NO.

EP 25 20 3017

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2025

| Patent document cited in search report | | Publication date | Patent family member(s) | | Publication date |
|---|---|---|---|---|---|
| US 2018232786 | A1 | 16-08-2018 | NONE | | |
| WO 2017212338 | A1 | 14-12-2017 | CN | 107464107 A | 12-12-2017 |
| | | | EP | 3465981 A1 | 10-04-2019 |
| | | | JP | 7260470 B2 | 18-04-2023 |
| | | | JP | 2019525363 A | 05-09-2019 |
| | | | US | 2019349269 A1 | 14-11-2019 |
| | | | WO | 2017212338 A1 | 14-12-2017 |
| US 11128716 | B1 | 21-09-2021 | US | 11128716 B1 | 21-09-2021 |
| | | | US | 2022239746 A1 | 28-07-2022 |
| US 9959152 | B2 | 01-05-2018 | EP | 3262587 A1 | 03-01-2018 |
| | | | US | 2016255159 A1 | 01-09-2016 |
| | | | US | 2019004881 A1 | 03-01-2019 |
| | | | US | 2019205192 A1 | 04-07-2019 |
| | | | US | 2020174862 A1 | 04-06-2020 |
| | | | US | 2022066850 A1 | 03-03-2022 |
| | | | WO | 2016137752 A1 | 01-09-2016 |

EPO FORM P0459

For more details about this annex : see Official Journal of the European Patent Office, No. 12/82